# EUROPEAN PATENT SPECIFICATION

(11) **EP 2 803 456 B1**
(45) Date of publication and mention of the grant of the patent: **15.11.2017**
(21) Application number: 11872004.4
(22) Date of filing: 05.09.2011
(51) Int. Cl.: B26F 1/42, B26D 7/18

(54) **STAMPING MACHINE FOR PLASTIC FILM**
STANZMASCHINE FÜR EINE KUNSTSTOFFFOLIE
MACHINE DE POINÇONNAGE POUR FILM PLASTIQUE

(43) Date of publication of application: 19.11.2014
(73) Proprietor: Ruiz Bernal, Francisco, 30530 Cieza (ES)
(72) Inventor: Ruiz Bernal, Francisco, 30530 Cieza (ES)
(74) Representative: Ungria López, Javier
(86) International application number: PCT/ES2011/070624
(87) International publication number: WO 2013/034781

(56) References cited:
- EP-A1- 0 115 804
- ES-A3- 380 084
- GB-A- 909 634
- JP-A- H03 119 927
- US-A- 1 978 136

## Description

### Field of the art

The invention intended to be patented relates to the field of the manufacture of industrial machinery intended for the treatment, transformation and adaptation of laminated plastic material.

### State of the art

The aim of providing micro or macroperforated plastics is having a resistant material, primarily intended for the packaging in palletizing systems, that permits an optimal ventilation without creating a thermal barrier, thereby reducing consumption of polymeric materials without diminishing mechanical resistance.

At present, within the field of plastic film treatment, there exist several stamping techniques aimed at achieving a perforated film (microperforated and/or macroperforated) that are primarily based on the application of heat by means of electric resistances, and laser or heat radiation.

The drawbacks of these currently existing processes are that they need on the one hand a large amount of energy to complete the stamping proper, with sophisticated systems for monitoring temperature, and, on the other hand, that they require equipment that is very sensitive to modifications of the productive capacity and the characteristics of the final product due to its great complexity.

Furthermore, cold perforation (devoid of heat transmission) of certain types of plastics, basically polyethylenes, which are in addition widely used in the packaging processes, has always posed technical difficulties, unresolved heretofore, that have resulted in the "biting" of the perforated film edges which reduced the resistance properties of the film and its stretching capacity, this additionally generating both an excessive wear and tear of the working implements and tools resulting in high manufacturing costs and also a problem hard to solve such as the cleaning or elimination of the stamping residues in an effective way and their transport to the recycling system.

Patent GB 909634 A describes a piercing machine for plastic film that by means of needles or punches in a roller acting over the film against an opposed roller with a silly putting surface punctures the film. This procedure does not perform cleanly cut orifices and it is not adequate to perform macro perforations.

From US 1978136 A there is known a stamping machine forming the base of the preamble of claim 1.

It is thus intended to achieve, through a process made as simplified as possible, a sheet made of macroperforated film basically used for securing palletized loads and for packaging goods requiring ventilation due to their particular characteristics, by means a cold stamping process that thus reduces energy consumption and achieves a highly controllable process that permits, in a single stamping process, obtaining one or several sheets of perforated film, having one or several layers, by adopting in the process an efficient system for the separation, collection and recovery of the perforated portion for subsequent recycling and reuse thereof.

### DETAILED DESCRIPTION OF THE INVENTION

The object of the machine for the manufacture of macroperforated plastic film by means of a cold-stamping process provided with an automated system for recovering the excess of material cut out for the recycling thereof is to produce a (single-layer or multi-layer) sheet of macroperforated film through a cold-stamping process. Both the size and the geometry as well as the arrangement of the holes can be modified depending on the applications desired for the final product. In order to achieve this goal it has been devised a system whereby after the roller (or rollers) have been fed with plastic film, it follows the feeding of film for further automatic unwinding in order to feed a double roller that rotates concurrently. One of these cylinders, the stamping cylinder, is provided on its surface with an array of reliefs featuring both the desired shape and arrangement. The entire stamping assembly is shaped in tempered steel. The film, while passing through both rollers, is submitted to such a pressure that the stamping cylinder attains complete and clean cuts of each one of the holes to be made. This pressure can be conveniently adjusted thanks to a system of hydraulic pressure manometers depending on the material to be stamped and the thickness thereof. Once the plastic sheet or sheets have been stamped, it is injected pressurized air through the lower portion by means of a perforated rod such that the cut out disc can be separated from the stamped sheet. This recovery system is perfected by a continuous suction system located right above the rod and above the plastic sheet such that the material residues (cut-out discs) can be suctioned and carried to a receiving tank for recycling thereof. The sheet is thus macroperforated and ready to be wound again on a roller located at the end of the line.

The assembly is perfected by a mechanical rollers device that permits to maintain the tension of plastic sheet constant while the stamping and the recovery processes are taking place. Furthermore, the machine has also been provided with a gear system that permits to easily proceed with the replacement of the stamping cylinder if required for the final product.

The whole process is carried out through verified systems so as to reduce the amount of static electricity that this type material naturally has.

The so designed system permits a multiplicity of entry exit (e-e) options that may consist of; an entry roller-an exit roller (le-le) whereby a macroperforated single-layer film is obtained; n entry rollers-n exit rollers (ne ne), n being the number of rollers coupled at the entry and at the exit, thus it being obtained n rollers of macroperforated single layer film; 2n entry rollers-n exit rollers (2ne-ne), thus it being obtained n exit rollers of macroperforated multi layer film. The combinations so obtained would be virtually unlimited in number.

### DESCRIPTION OF THE DRAWINGS

The present specification is accompanied by a series of drawings that describe the process and are intended to graphically illustrate the above described manufacturing process.

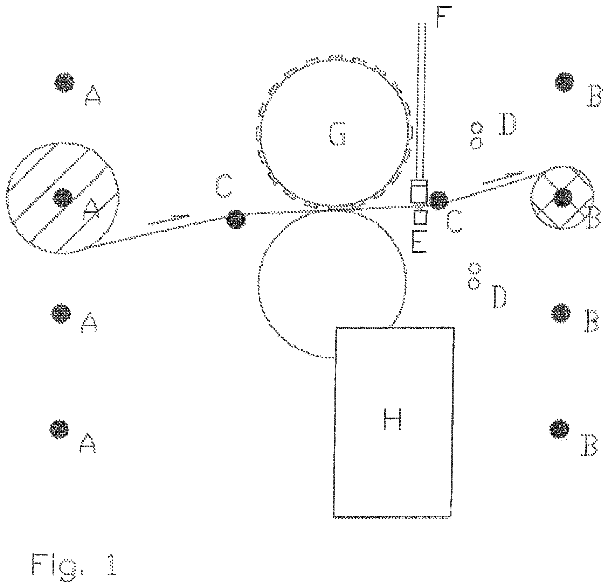

Figure 1 shows a side view of the machine assembly. Letters A and B refer to rotating cylinders into which the rollers with entry and exit material are inserted. In order to achieve an efficient rotation devoid of gliding, these cylinders are provided with a pneumatic adjustment system that actuates on the roller mandrels. Letter C stands for the tensioning system that allows the plastic sheet to pass through the stamping process with virtually constant tension. When several rollers are fed in A the perforated film passes through the set of rollers D in order to either become separated in single layer sheets or form a single layer sheet. The perforated sheet is then subjected to the recovery process of the stamped portion by means of the blowing performed through rod E and the excess material is suctioned by F and carried to the storing area for recycling thereof. In this same figure stamping cylinder G and control board H are illustrated.

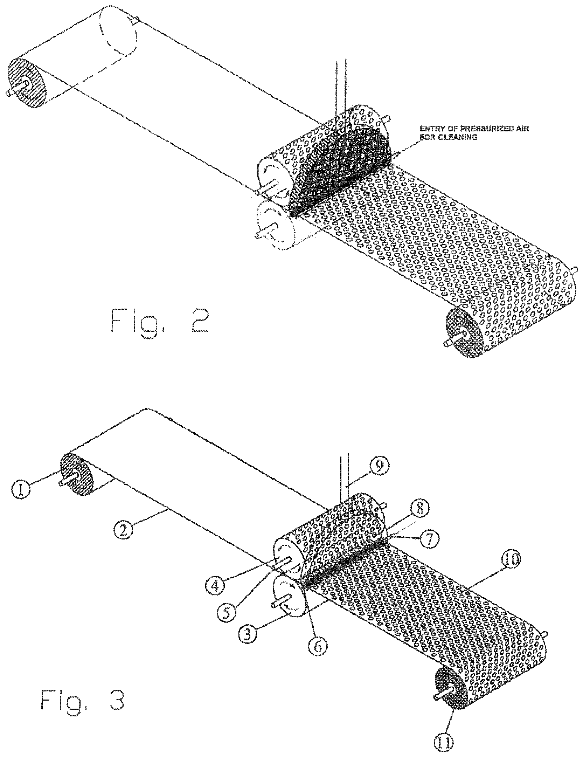

Figure 2 shows a simplified diagram of the unwinding process, the stamping, and the cleaning, recovery and winding system of the macroperforated material.
Figure 3, like figure 2, shows the same diagram although it pinpoints the most significant parts of the process; the untreated plastic roller (1) is unwound and the film (2) passes through pinch roller (3) and stamping roller (4), the required pressure adjustment being performed on shaft (5). Perforated rod (6) placed underneath the stamped film (10) lets the air pass, which air is introduced under pressure through the end (7) thereof, this resulting in the separation of the excess plastic portion that is then received in suction pipe (8) and carried through duct (9) to the collection area. A treated plastic roller (11) winds up the stamped film (10).

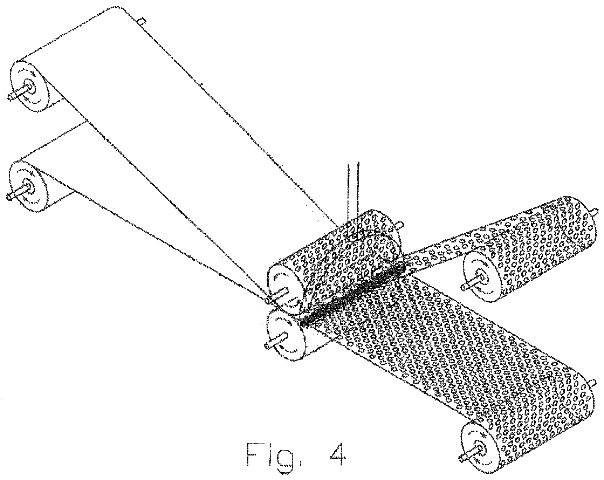

Figure 4 shows the variant described for n entry rollers-n exit rollers (two entry rollers and two exit rollers are illustrated for the sake of clarity of the drawing). The separation of the sheets is carried out at the exit of the recovery process of the excess cut-out material such that the stamping process is simultaneous as regards both sheets.

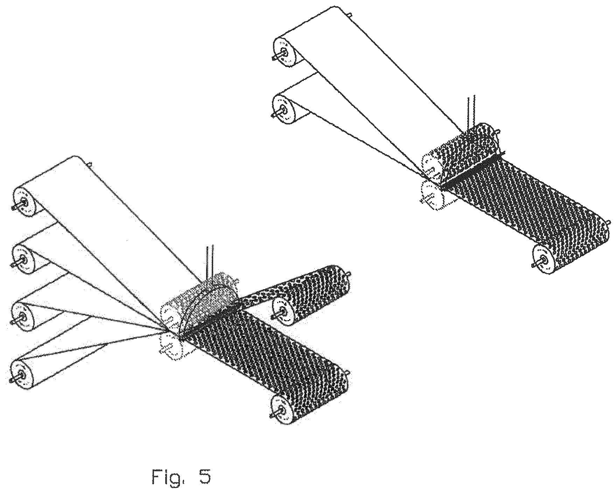

Figure 5 shows the variant described for 2n entry rollers-n exit rollers (combinations 2-1 and 4-2 are illustrated for the sake of simplicity of the drawing) such that it is obtained a multi-layer film (2) in this case.

## Claims

1. A stamping machine for plastic film, of the type comprising a macro-perforation system in which the film passes between two parallel rollers (3, 4), one of the rollers being a stamping roller (4) comprising an array of elements configured to perform disc-shaped cuts on a plastic sheet (2), wherein the elements of the stamping roller (4) configured to perform disc-shaped cuts are an array of reliefs provided on the surface of the stamping roller (4), the reliefs consisting of closed contours featured on the surface of the stamping roller (4), with a predetermined geometry and being arranged in a predetermined manner, **characterised in that** the macro-perforation system being configured to perform cold-stamping, at room temperature, through pressure controlled by means of hydraulic pressure manometers.

2. The stamping machine of claim 1, wherein the stamping machine is provided with an automatic system for cleaning and recovering the material residues.

3. The stamping machine of claim 2, wherein the automatic system for cleaning and recovering the material residues comprises:
- a perforated rod (6) configured to inject pressurized air through the lower portion of the stamped sheet (10), such that the material residues are separated from the stamped sheet (10);
- a continuous suction system located above the perforated rod (6) and above the stamped sheet (10), such that the separated material residues are suctioned and carried to a receiving tank for recycling thereof.

4. The stamping machine of claim 1, wherein the stamping machine is configured to simultaneously perform macro-perforations on one or several plastic sheets (2) feeding one or more plastic sheets (2) in said macro-perforation system that performs the cold-stamping.

5. The stamping machine of claim 1, wherein the stamping machine is provided with a system for exchanging the stamping rollers (4) that permits the manufacture of products featuring different finishes that are suitable for direct use or for use upon prior pre-stretching of the material.

6. The stamping machine according to the previous claims, wherein the stamping machine is provided with one or more rollers (A) feeding said macro-perforation system, exiting one end roller (B) from said perforation system.

7. The stamping machine according to any of the claims 1 to 5, wherein the stamping machine is provided with more than one roller (A) feeding said perforation system, exiting more than one end roller (B) from said perforation system.

8. The stamping machine of claim 6 or claim 7, wherein the stamping machine comprises a set of rollers (D) configured to either separate the stamped sheet (10) in separate single layer sheets or either form a single layer sheet.

9. The stamping machine according to any of the preceding claims, wherein the stamping machine comprises a tensioning system (C) that allows the plastic sheet (2) to pass through the stamping process with virtually constant tension.

## Patentansprüche

1. Kunststofffolien-Stanzmaschine des Typs, der ein Makro-Perforierungssystem aufweist, in welchem die Folie zwischen zwei parallelen Walzen (3, 4) durchläuft, wobei eine der Walzen eine Stanzwalze (4) mit einem Array aus Elementen ist, die ausgebildet sind, scheibenförmige Einschnitte auf einer Kunststofffolie (2) auszuführen, wobei die Elemente der Stanzwalze (4), die zur Ausführung von scheibenförmigen Einschnitten ausgebildet sind, ein Array aus Erhebungen sind, die auf der Oberfläche der Stanzwalze (4) vorgesehen sind, wobei die Erhebungen aus geschlossenen Konturen, die auf der Oberfläche der Stanzwalze (4) ausgebildet sind, mit einer vorbestimmten Geometrie bestehen und in vorbestimmter Weise angeordnet sind,
**dadurch gekennzeichnet, dass**
das Makro-Perforierungssystem ausgebildet ist, eine Kalt-Stanzung bei Raumtemperatur durch Druck auszuführen, der mittels eines Hydraulikdruck-Manometers gesteuert ist.

2. Stanzmaschine nach Anspruch 1, wobei die Stanzmaschine mit einem automatischen System zur Reinigung und Wiederaufbereitung der Materialreste versehen ist.

3. Stanzmaschine nach Anspruch 2, wobei das automatische System zur Reinigung und Wiederaufbereitung der Materialreste umfasst:
- einen perforierten Stab (6), der ausgebildet ist, Druckluft durch den unteren Bereich der gestanzten Folie (10) derart einzuführen, dass die Materialreste von der gestanzten Folie (10) abgelöst werden;
- ein kontinuierlich arbeitendes Saugsystem, das über dem perforierten Stab (6) und über der gestanzten Folie (10) derart angeordnet ist, dass die abgelösten Materialreste angesaugt und zu ihrer Wiederaufarbeitung zu einem Aufnahmebehälter transportiert werden.

4. Stanzmaschine nach Anspruch 1, wobei die Stanzmaschine ausgebildet ist, gleichzeitig Makro-Perforierungen an einer oder mehreren Kunststofffolien (2) auszuführen, wobei eine oder mehrere Kunststofffolien (2) dem Makro-Perforierungssystem zugeführt werden, das die Kalt-Stanzungen ausführt.

5. Stanzmaschine nach Anspruch 1, wobei die Stanzmaschine mit einem System zum Austausch der Stanzwalzen (4) versehen ist, das die Herstellung von Produkten ermöglicht, die unterschiedliche Endbearbeitungen aufweisen, die für eine direkte Nutzung oder für die Nutzung bei einer vorhergehenden Vordehnung des Materials geeignet sind.

6. Stanzmaschine nach einem der vorhergehenden Ansprüche, wobei die Stanzmaschine mit einer oder mehreren, das Makro-Perforierungssystem speisenden Walzen (A) und einer Schlusswalze (B) zum Austritt aus dem perforierten System versehen ist.

7. Stanzmaschine nach einem der Ansprüche 1 bis 5, wobei die Stanzmaschine mit mehr als einer, das Perforierungssystem speisenden Walze (A) und mehr als einer Schlusswalze (B) zum Austritt aus dem Perforierungssystem versehen ist.

8. Stanzmaschine nach Anspruch 6 oder Anspruch 7, wobei die Stanzmaschine eine Gruppe aus Walzen (D) aufweist, die ausgebildet sind, die gestanzte Folie (10) in separate einzelne Schichten zu trennen oder eine Einzelschichtfolie zu bilden.

9. Stanzmaschine nach einem der vorhergehenden Ansprüche, wobei die Stanzmaschine ein Spannsystem (C) aufweist, das es ermöglicht, dass die Kunststofffolie (2) den Stanzvorgang mit nahezu konstanter Spannung durchläuft.

## Revendications

1. Machine de poinçonnage pour film plastique, du type comprenant un système de macro-perforation dans lequel le film passe entre deux rouleaux parallèles (3, 4), l'un des rouleaux étant un rouleau de poinçonnage (4) comprenant un ensemble d'éléments configurés pour réaliser des découpes en forme de disque sur une feuille plastique (2), dans laquelle les éléments du rouleau de poinçonnage (4) configurés pour réaliser des découpes en forme de disque sont un ensemble de reliefs prévus sur la surface du rouleau de poinçonnage (4), les reliefs se composant de contours fermés présentés sur la surface du rouleau de poinçonnage (4), avec une géométrie prédéterminée et étant agencés d'une manière prédéterminée, **caractérisée en ce que** le système de macro-perforation est configuré pour réaliser un poinçonnage à froid, à température ambiante, par le biais de la pression contrôlée au moyen de manomètres de pression hydraulique.

2. Machine de poinçonnage selon la revendication 1, dans laquelle la machine de poinçonnage est prévue avec un système automatique pour nettoyer et récupérer les résidus de matériau.

3. Machine de poinçonnage selon la revendication 2, dans laquelle le système autonome pour nettoyer et récupérer les résidus de matériau comprend :
une tige perforée (6) configurée pour injecter de l'air sous pression par la partie inférieure de la feuille poinçonnée (10), de sorte que les résidus de matériau sont séparés de la feuille poinçonnée (10) ;
un système d'aspiration continu positionné au-dessus de la tige perforée (6) et au-dessus de la feuille poinçonnée (10), de sorte que les résidus de matériau séparés sont aspirés et transportés vers un réservoir de réception pour leur recyclage.

4. Machine de poinçonnage selon la revendication 1, dans laquelle la machine de poinçonnage est configurée pour réaliser simultanément des macro-perforations sur une ou plusieurs des feuilles plastiques (2) amenant une ou plusieurs feuilles plastiques (2) dans ledit système de macro-perforation qui réalise le poinçonnage à froid.

5. Machine de poinçonnage selon la revendication 1, dans laquelle la machine de poinçonnage est prévue avec un système pour échanger les rouleaux de poinçonnage (4) qui permet la fabrication de produits présentant différentes finitions qui sont appropriées pour l'utilisation directe ou après le pré-étirement préalable du matériau.

6. Machine de poinçonnage selon les revendications précédentes, dans laquelle la machine de poinçonnage est prévue avec un ou plusieurs rouleaux (A) alimentant ledit système de macro-perforation, en faisant sortir un rouleau d'extrémité (B) dudit système de perforation.

7. Machine de poinçonnage selon l'une quelconque des revendications 1 à 5, dans laquelle la machine de poinçonnage est prévue avec plus d'un rouleau (A) alimentant ledit système de perforation, en faisant sortir plus d'un rouleau d'extrémité (B) dudit système de perforation.

8. Machine de poinçonnage selon la revendication 6 ou la revendication 7, dans laquelle la machine de poinçonnage comprend un ensemble de rouleaux (D) configurés pour séparer la feuille poinçonnée (10) en feuilles monocouches séparées ou former une feuille monocouche.

9. Machine de poinçonnage selon l'une quelconque des revendications précédentes, dans laquelle la machine de poinçonnage comprend un système de tension (C) qui permet à la feuille plastique (2) de passer par le processus de poinçonnage avec une tension pratiquement constante.
